# EUROPEAN PATENT SPECIFICATION

(11) **EP 2 442 313 B1**
(45) Date of publication and mention of the grant of the patent: **06.12.2017**
(21) Application number: 10785782.3
(22) Date of filing: 08.06.2010
(51) Int. Cl.: G21C 17/06

(54) **APPARATUS FOR THE RADIOMETRIC INSPECTION OF FUEL ELEMENTS**
VORRICHTUNG ZUR RADIOMETRISCHEN PRÜFUNG VON BRENNSTOFFELEMENTEN
APPAREIL POUR L'INSPECTION RADIOMÉTRIQUE D'UN ÉLÉMENT COMBUSTIBLE

(30) Priority: 08.06.2009 ES 200930278
(43) Date of publication of application: 18.04.2012
(73) Proprietor: Enusa Industrias Avanzadas, S.A., 28040 Madrid (ES)
(72) Inventor: RODERO RODERO, José, María, E-28040 Madrid (ES); ALVAREZ GONZALEZ, Pedro, E-28040 Madrid (ES)
(74) Representative: Carpintero Lopez, Francisco
(86) International application number: PCT/ES2010/070382
(87) International publication number: WO 2010/142831

(56) References cited:
- WO-A1-2004/059656
- ES-T3- 2 078 586
- ES-T3- 2 209 740
- GB-A- 2 435 785
- JP-A- 61 164 152
- JP-A- 61 164 152
- US-A- 4 637 912
- US-A- 5 754 611

## Description

### Technical field of the Invention

The invention is encompassed in the field of equipment for inspecting irradiated fuel elements used in nuclear reactors.

### Background of the Invention

Fuel elements comprising a plurality of nuclear fuel rods, arranged in the form of a matrix, in rows and columns are used in nuclear reactors. These rods include fuel pellets, for example, of uranium (U), in the form of uranium oxide (UO₂), usually enriched with ²³⁵U.

There are systems for measuring this type of fuel elements. There are, for example, germanium crystal-based gamma radiation detectors which are used to measure the gamma radiation emitted by the fuel elements after using the same in the nuclear reactor. This type of measurements, which can include a spectrometry, can serve for checking the burn-up degree of the elements, an important step before storing the elements. These measurements, for example, can be necessary for checking the behaviour of the product (i.e., for checking that it has burned as expected) and for checking that it has burned to the anticipated limit, something important for the subsequent treatment of the fuel element.

What is known as a fuel element scanning is performed using a gamma radiation detector and, sometimes also a fission chamber detector or neutron detector due to these and other reasons.

A conventional form of performing this type of scanning is based on moving the fuel element in a vertical direction using a crane, such that the fuel element moves vertically with respect to the gamma radiation or neutron detectors, which register the radiation during said movement or measuring it at fixed heights of the element. Another conventional way of performing this type of measurements is based on moving a gamma radiation and/or neutron detector head along a fixed fuel element, for example, located in a temporary storage pool. In both cases there is the problem where it can be difficult to assure that the position of the fuel element is sufficiently controlled with respect to the detector. It can be difficult, for example, to assure that the distance between the radiation detector and the fuel element is exactly the correct one.

In addition, many of the known systems which are based on germanium crystals are large and require cooling with liquid nitrogen, something which makes the assembly and its operation complex and costly.

Additionally, in at least some of the known systems, controlling the position of the detector in the axial axis of the fuel element with enough precision, in a manner associated with the data provided by the detector to the information processing system can be difficult.

Prior art document GB2435785 is an example of such known method and device for determining the combustion rate of a nuclear reactor fuel assembly.

### Description of the Invention

The invention refers to an apparatus for the radiometric inspection of a fuel element of the type comprising a plurality of nuclear fuel rods. The apparatus comprises at least one radiation detector, which can be a gamma radiation detector and/or a neutron detector.

According to the invention, the apparatus further comprises, a frame comprising an opening configured so that the fuel element is moved through said opening (for example, by the action of a crane or the likes) in a direction substantially parallel to the longitudinal axes of the nuclear fuel rods. The radiation detector is located in said frame in a position which allows detecting radiation from the fuel element when said fuel element is moved through said opening. Furthermore, the apparatus comprises positioning means located in correspondence with said opening and configured for keeping at least one surface of the fuel element at a predetermined distance from the radiation detector when the fuel element is moved through said opening.

A correct positioning of the radiation detector with respect to the fuel element during the measurement or scanning of the fuel element can thus be assured, particularly, during its relative movement with respect to the frame in the direction of the longitudinal axes of the rods. This correct positioning can serve to allow obtaining measurements with an acceptable reliability and quality, even using, for example, a small gamma radiation detector which functions at pool water temperature, i.e., without the need of a costly cooling system.

The fuel element can be moved through the opening by moving the frame and keeping the fuel element fixed, or by moving the fuel element keeping the frame fixed, or by moving both elements, such that a relative movement between the two elements is produced.

The apparatus can comprise one or more gamma collimators for small detectors at room temperature designed for axial profilometry and also high efficiency axial profilometry neutron collimator(s). A measurement chain incorporating specific identification software of gamma isotopes (Ru-106, Eu-154, Cs-134 and Cs-137) and a burn-up determination software per unit length can be incorporated.

The positioning means can comprise at least one first support guide mounted on said frame and configured for contacting said surface of the fuel element such that said surface of the fuel element rests on said first support guide when the fuel element is moved through said opening. The support guide thus serves for defining the position between the fuel element and the gamma radiation or neutron detector precisely.

The positioning means can further comprise at least one first pushing element configured for pushing the fuel element towards the first support guide. That the fuel element remains in contact with the support guide and, therefore, at the desired distance from the radiation detector during the scanning can thus be assured.

The opening can have four sides (which can correspond with the sides of the fuel element), the first support guide being located in correspondence with a first of said sides and said first pushing element being located in correspondence with a second of said sides, said second of said sides being opposite to said first of said sides. An easily implemented system which assures the correct positioning of the fuel element with respect to the radiation detector during the scanning is thus achieved.

The first support guide can comprise at least one roller configured for rotating driven by said fuel element when said fuel element is moved through said opening. The friction between the first support guide and the fuel element during the movement of the fuel element relative to the apparatus is thus reduced.

Furthermore, the apparatus can comprise a second support guide located in correspondence with a third of said sides, and a second pushing element located in correspondence with a fourth of said sides. The correct positioning of the fuel element with respect to the sides of the opening is thus assured, something which can be especially advantageous when two or more sides are scanned simultaneously, for example, by using at least two gamma radiation detectors -one associated with each side- or at least one gamma radiation detector and at least one detector or fission chamber, arranged in correspondence with different sides of the opening.

The support guide can comprise a first roller, the second support guide can comprise a second roller, the first pushing element can be configured for pushing the fuel element against said first roller and the second pushing element can be configured for pushing the fuel element towards said second roller, when said fuel element is moved through said opening. This can facilitate a good positioning of the fuel element with respect to one or more detectors located in correspondence with the opening and a correct positioning of the fuel element in the plane of the opening can be achieved. In addition to the pushing elements there can be, for example, four guiding rollers, one in correspondence with each side of the opening for better controlling the movement of the fuel element and protecting the fuel element as well as the measurement devices.

The apparatus can comprise at least one pushing element configured for pushing the fuel element towards one side of said opening, the pushing element comprising at least one roller, said roller being associated with a detector for the axial coding of the fuel element movement with respect to the radiation detector. The apparatus can, for example, comprise at least two pushing elements configured for pushing the fuel element towards respective sides of said opening, each pushing element comprising at least one roller, each one of said rollers being associated with a detector for the axial coding of the fuel element movement with respect to the radiation detector. Two sets of data indicative of the axial position of the fuel element can be obtained with two detectors for the axial coding, something which allows determining said position in a more reliable manner, for example, in the event that any of the rollers malfunction (for example, as a result of a bad contact with the fuel element) or detectors.

A roller of a guiding element can be complementary or alternatively associated with a detector for the axial coding of the fuel element movement with respect to the radiation detector. This can be an alternative or complement to the use of the pushing elements for the axial coding.

The apparatus can comprise coupling means configured for coupling the frame to a fuel element rack in a fuel element storage pool. The frame can thus be coupled to the rack in the pool and then moves the fuel element with respect to the frame -through its opening- using, for example, the crane which is conventionally used for handling the fuel elements in the pool.

The apparatus can comprise means for modifying the distance between the radiation detector (or detectors, if there are several) and the opening, such that the distance between the radiation detector and the surface of the fuel element which is moved through said opening can be modified. It is thus possible to optimise the fuel element inspection with different widths such as the case of fuel elements for pressurised water reactors (PWR) 15x15 or 17x17, and to also apply the apparatus to fuel elements for boiling water reactors (BWR). These means for modifying the distance can comprise rails or the likes along which the radiation detector can be moved in a controlled manner, motorised or not. Alternatively, the means can comprise a plurality of fixing points -for example, made up of orifices or the likes- in which the radiation detector or detectors (for example, gamma radiation and/or neutron detectors) can be selectively fixed depending on the dimensions of the fuel element on which the measurements must be made.

The radiation detector can be provided with an exchangeable collimator assembly. Thus, by selecting the collimator or collimators which are used at each moment, the measurement window of the total radiation reaching the radiation sensitive detection element can be adjusted. It is thus possible to operate with a more suitable sensitive detection element and achieve a greater quality of detection making said detector work in its optimum operating range.

The radiation detector can be a gamma radiation detector and can comprise an air collimator. Said air collimator allows seeing, by the detector and through the window of the collimator, the fuel element with a lower quantity of low Z elements (water) between the gamma radiation detector itself and the fuel element. The air collimator establishes an air chamber allowing the radiation to be measured to reach the gamma radiation detector, but leaving the other parts of the equipment protected by a water barrier which attenuates the gamma radiation. In other words, the water is used as armour for the sensitive part of the equipment, better "signal/compton" ratios and ultimately a better efficiency thus being achieved.

The air collimator can have a horizontal cross section (assuming a configuration in which the fuel element is located with its longitudinal axis vertical) in the form of an isosceles trapezoid. The detection of the radiation to be detected can thus be optimised, with a good "signal/compton" ratio and with a solid determined observation angle.

The air collimator can be detachably coupled to a casing of the gamma radiation detector. In other words, it could be an air collimator which could be replaced by another of other dimensions. The apparatus can thus be easily optimised for different types of fuel elements, for example, 15x15 or 17x17.

The positioning means can comprise a first pushing element configured for pushing the fuel element in a first direction and a second pushing element configured for pushing the fuel element in a second direction, forming a 90 degree angle with respect to said first direction. The positioning of the fuel element in the opening and its distance with respect to two detectors, for example, a gamma radiation detector and a neutron radiation detector, located in correspondence with respective sides of the opening can thus be assured.

### Description of the Drawings

To complement the description which is being made and for the purpose of aiding to better understand the features of the invention according to a preferred practical embodiment thereof, a set of drawings is attached as an integral part of said description in which the following has been depicted with an illustrative and non-limiting character:
Figures 1 and 2 show respective perspective views of the apparatus according to an embodiment of the invention.
Figures 3 and 4 show respective vertical sections of said embodiment of the invention.
Figures 5 and 6 show a horizontal and vertical section, respectively, of a gamma radiation detector which can be used in some relations of the invention.
Figure 7 is a vertical cross section of a fission chamber as neutron detector useful for some embodiments of the invention.
Figure 8 is a perspective view of a possible embodiment of a pushing element with a detector for axial coding.

### Preferred Embodiment of the Invention

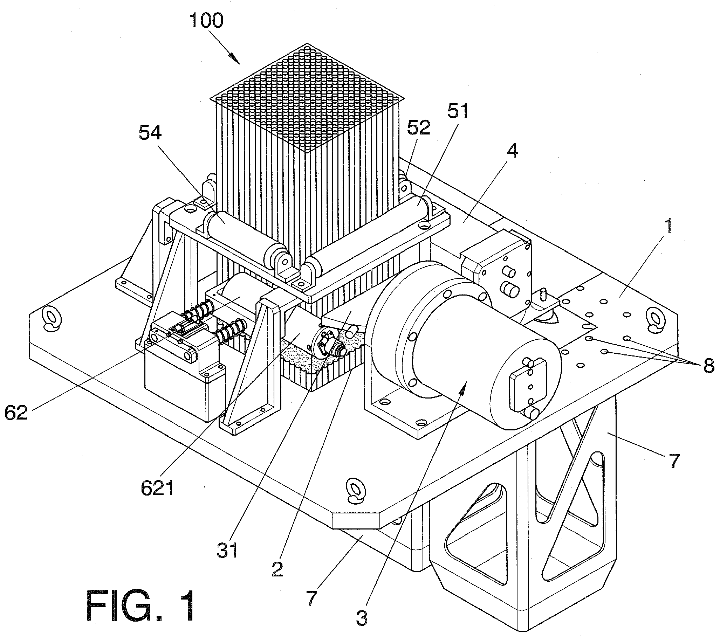

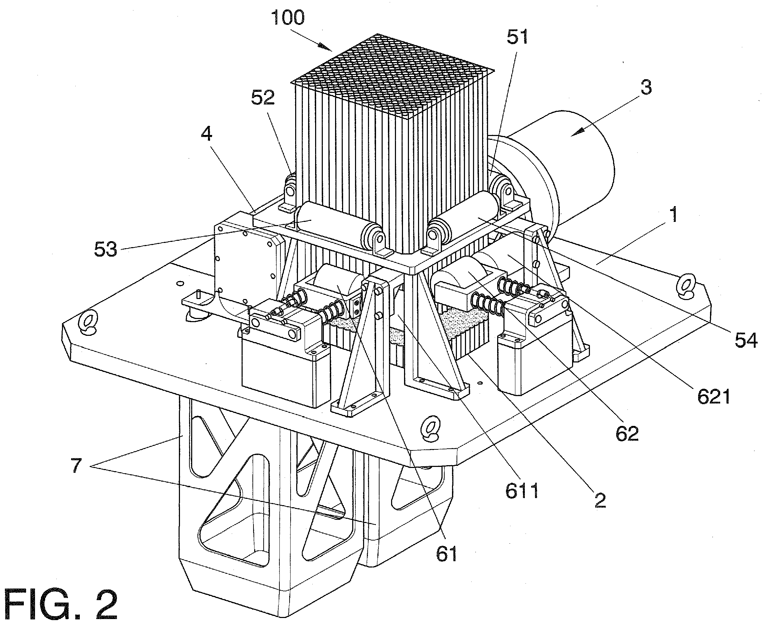

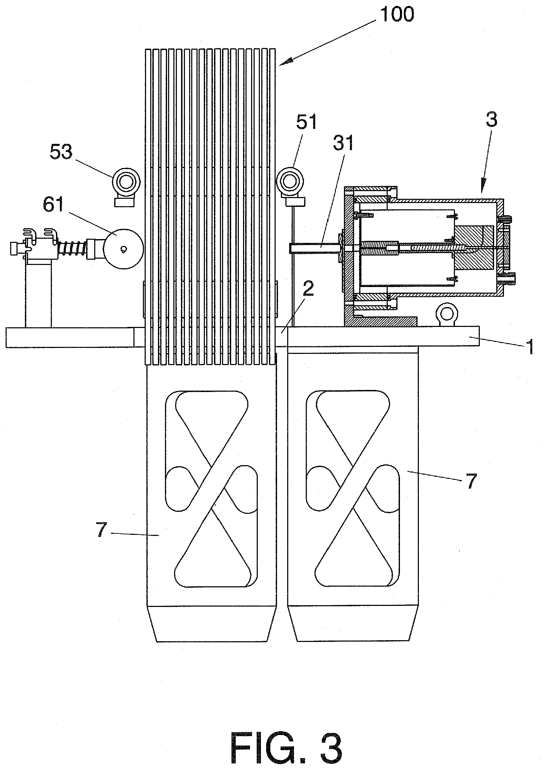

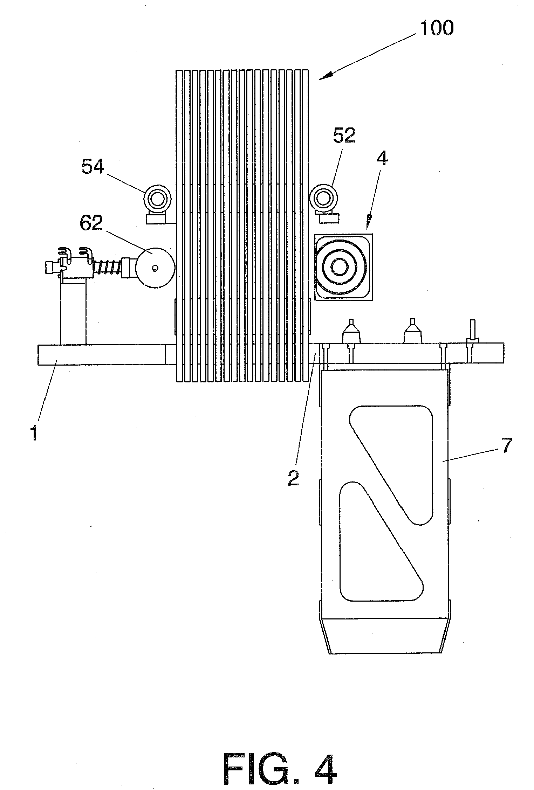

Figures 1-4 depict different views of an apparatus according to a possible embodiment of the invention, based on a frame 1 or the likes provided with an opening 2 (Figures 3 and 4) through which the fuel element 100 can slide vertically, following its longitudinal or axial axis. The relative movement between the frame and fuel element in the longitudinal direction of the fuel element can, for example be performed with a crane, for example, with the crane which is conventionally used for handling the fuel element in a nuclear power station pool. In other words, it is possible to achieve this movement without depending on devices specific for that purpose. It is also possible to move the frame 1, for example, with a crane or with another device.

A gamma radiation detector 3 is mounted on the platform or frame 1, in correspondence with a side of the opening 2 and a fission chamber or neutron detector 4 is mounted in correspondence with another side of the opening (in this case, a side adjacent to the first). It is possible to install more detectors in correspondence with the same and/or with other sides of the opening, for example, two gamma radiation detectors at respective sides of the opening, and two neutron detectors at other sides of the opening.

How the positioning means are located for establishing suitable distances between the surfaces of the fuel element 100 and the detectors 2 and 3 can be seen in Figures 1-4. A first roller 51 acts as a support guide on which the corresponding surface of the fuel element rests on when the fuel element is moved through said opening, and the pushing element 61 pushes the opposite surface of the fuel element to assure that the fuel element maintains contact with the roller 51 during the vertical movement of the fuel element, thus assuring that the distance between the surface of the fuel element 100 and the gamma radiation detector 3 is kept constant during the scanning. In addition, the pushing element 62 pushes the fuel element towards another roller 52, thus assuring a correct distance between the corresponding surface of the fuel element and the fission detector 4. In addition, as can be seen, there are another two guiding rollers 53 and 54, such that there is a guiding roller (51-54) located in correspondence with each of the sides of the opening. The rollers can be located such that they assure that the fuel element can not strike against the edges of the opening 2, thus reducing the risk of accidents which could damage the fuel element.

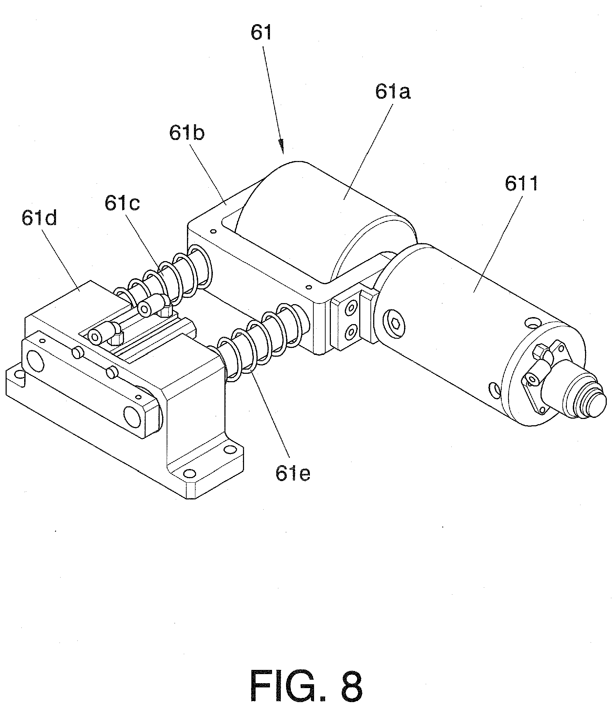

Figure 8 depicts an example of how the pushing elements can be made. In this case, the pushing element comprises a roller 61a mounted on a support 61b coupled to another support 61d which is fixed in the frame 1; the supports 61b and 61d are joined by means of shafts or pins 61c which are fixed in the support 61d such that they can slide through said support 61d. The springs 61e are located around the pins 61c and exert a pressure causing the two supports 61b and 61d to tend to separate, such that the roller 61a exerts a pressure on the fuel element when the device is in use.

It can also be seen in Figure 8 how there is a detector 611 or encoder associated with the pushing element which produces an electric output signal indicative of the roller movement and which serves for the axial coding of the fuel element movement with respect to the gamma radiation detector, i.e., for associating the measurements made with the gamma radiation detector at a determined axial position of the fuel element 100. There are many conventional devices for this purpose, therefore it is not necessary to describe the detector 611 or its operation in more detail.

Figure 1 schematically illustrates a plurality of orifices 8 serving so that the gamma radiation detector 3 and the neutron detector 4 can be located in optimum positions, at an optimum distance from the fuel element. Alternatively, the gamma radiation detector and/or the neutron detector can be located on rails, or be associated with other means for varying the position of the detectors with respect to the fuel element 100.

It can be seen in Figures 1-4 how the frame 1 is provided with a structure 7 in its lower part configured to enable coupling the frame to a fuel element rack in a fuel element storage pool.

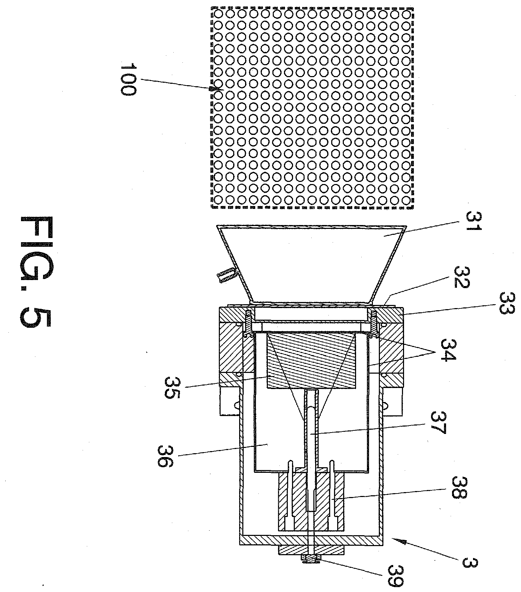

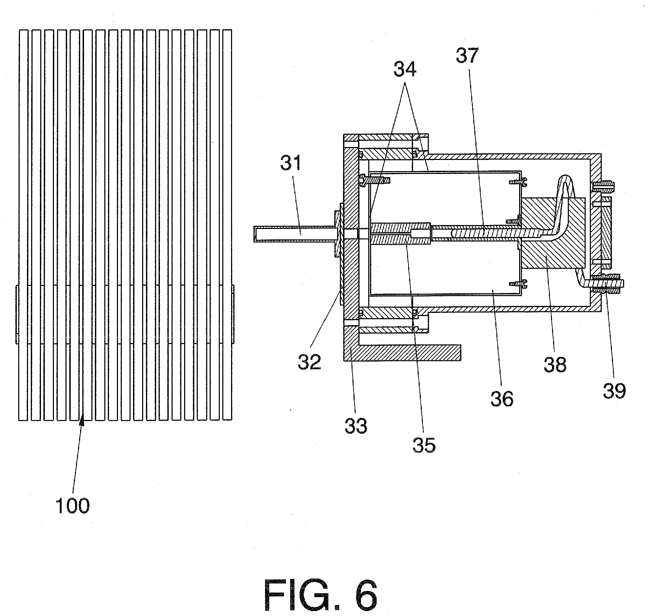

It can be seen in Figures 1, 3, 5 and 6 how the gamma radiation detector has been completed with an air collimator 31, something which allows reducing the amount of water which is found between the gamma radiation element sensor 37 and the fuel element 100, regardless of the distance between the casing 33 of the gamma radiation detector and the fuel element. The air collimator (a device which basically demarcates an air chamber) is coupled to the casing of the detector 3 such that it can be replaced by another air collimator, of other dimensions, for adapting the apparatus to a fuel element of other dimensions. As can be observed in, for example, Figures 5 and 6, the air collimator has a substantially flat configuration in the vertical direction, and an isosceles trapezoid configuration in the horizontal plane.

Figures 5 and 6 schematically depicts the structure of a gamma radiation detector 3 which may be suitable for the invention and which comprises in addition to the air collimator 31, a tungsten filter 32, a leak tight chamber 33, a cadmium layer 34 (with a thickness of approximately 1 mm), establishing a chamber within which a tungsten collimator 35 and a tungsten shield 36 is housed. The gamma radiation element detector 37 itself is located within the shield 36 and behind the tungsten collimator 35. A protector of the cable 38 (for protecting the cable of the detector element 37 from diffused radiation) and the outlet 39 of the cable can also be observed. Other types of gamma radiation detectors can be used with the invention within the basic concept of the invention.

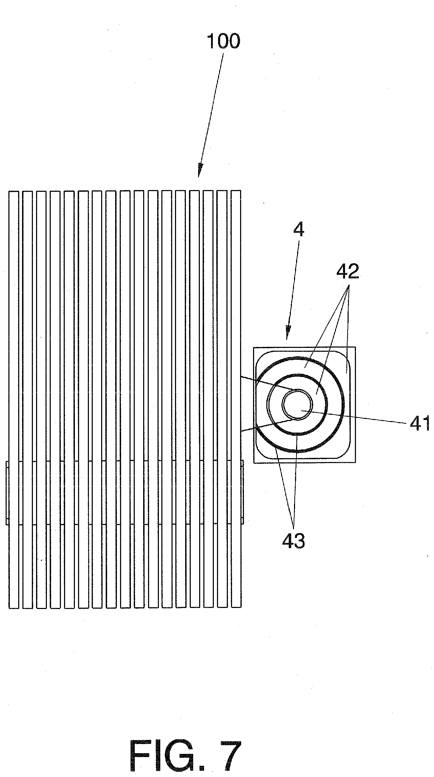

Figure 7 depicts a possible embodiment of the neutron detector located within a polyethylene structure 42 and protected by cadmium layers 43, such that preferably neutrons coming from a determined direction are detected.

In this text, the word "comprises" and its variants (such as "comprising", etc.) should not be interpreted in an excluding manner, i.e., they do not exclude the possibility that what is described may include other elements, steps etc.

In addition, the invention is not limited to the specific embodiments which have been described rather it also covers, for example, the variants which can be carried out by the person having average knowledge in the art (for example, in terms of the selection of materials, dimensions, components, configuration, etc.), from what is inferred from the claims.

## Claims

1. Apparatus for the radiometric inspection of a fuel element (100) comprising a plurality of nuclear fuel rods, the apparatus comprising at least one radiation detector (3), the apparatus additionally comprises:
a frame (1) comprising an opening (2) configured so that the fuel element is moved through said opening in a direction substantially parallel to the longitudinal axes of the nuclear fuel rods, the radiation detector (3) being located in said frame in a position which allows detecting radiation from the fuel element when said fuel element is moved through said opening;
positioning means (51, 61) located in correspondence with said opening and configured for keeping a surface of the fuel element at a predetermined distance from the radiation detector when the fuel element is moved through said opening.

2. Apparatus according to claim 1, **characterised in that** said positioning means comprise at least one first support guide (51) mounted on said frame and configured for contacting said surface of the fuel element such that said surface of the fuel element rests on said first support guide (51) when the fuel element is moved through said opening.

3. Apparatus according to claim 2, **characterised in that** said positioning means further comprise at least one first pushing element (61) configured for pushing the fuel element towards the first support guide (51).

4. Apparatus according to claim 3, **characterised in that** the opening has four sides, the first support guide (51) being located in correspondence with a first of said sides and said first pushing element (61) being located in correspondence with a second of said sides, said second of said sides being opposite said first of said sides.

5. Apparatus according to any of claims 3 and 4, **characterised in that** said first support guide (51) comprises at least one roller configured for rotating driven by said fuel element when said fuel element is moved through said opening.

6. Apparatus according to claim 4, **characterised in that** it comprises a second support guide (52) located in correspondence with a third of said sides, and a second pushing element (62) located in correspondence with a fourth of said sides.

7. Apparatus according to claim 6, **characterised in that** said first support guide (51) comprises a first roller and **in that** said second support guide (52) comprises a second roller, and **in that** said first pushing element (61) is configured for pushing the fuel element against said first roller and **in that** said second pushing element (62) is configured for pushing the fuel element towards said second roller, when said fuel element is moved through said opening.

8. Apparatus according to claim 1, **characterised in that** it comprises at least one pushing element (61) configured for pushing the fuel element towards one side of said opening, the pushing element (61) comprising at least one roller, said roller being associated with a detector (611) for the axial coding of the fuel element movement with respect to the radiation detector.

9. Apparatus according to claim 8, **characterised in that** it comprises at least two pushing elements (61, 62) configured for pushing the fuel element towards respective sides of said opening, each pushing element (61, 62) comprising at least one roller, each of said rollers being associated with a detector (611, 612) for the axial coding of the fuel element movement with respect to the radiation detector.

10. Apparatus according to claim 5, **characterised in that** said at least one roller is associated with a detector for the axial coding of the fuel element movement with respect to the radiation detector.

11. Apparatus according to any of the preceding claims, **characterised in that** it comprises coupling means (7) configured for coupling the frame (1) to a fuel element rack in a temporary fuel element storage pool.

12. Apparatus according to any of the preceding claims, **characterised in that** it comprises means (8) for modifying the distance between the radiation detector and the opening, such that the distance between the radiation detector and the surface of the fuel element which is moved through said opening can be modified.

13. Apparatus according to any of the preceding claims, **characterised in that** the radiation detector is a gamma radiation detector (3) provided with an exchangeable collimator assembly (35).

14. Apparatus according to any of the preceding claims, **characterised in that** the radiation detector is a gamma radiation detector comprising an air collimator (31).

15. Apparatus according to claim 14, **characterised in that** the air collimator (31) has a horizontal cross section in the form of an isosceles trapezoid.

16. Apparatus according to claim 15 or 16, **characterised in that** the air collimator is detachably coupled to a casing of the radiation detector.

17. Apparatus according to claim 1, **characterised in that** the positioning means comprise a first pushing element (61) configured for pushing the fuel element in a first direction and a second pushing element (62) configured for pushing the fuel element in a second direction, forming a 90 degree angle with respect to said first direction.

## Patentansprüche

1. Vorrichtung zur radiometrischen Überprüfung eines Brennelements (100), umfassend eine Vielzahl von nuklearen Brennstäben, wobei die Vorrichtung zumindest einen Strahlungsdetektor (3) umfasst, wobei die Vorrichtung zusätzlich umfasst:
einen Rahmen (1), umfassend eine Öffnung (2), die derart ausgebildet ist, dass das Brennelement durch die Öffnung entlang einer zu den Längsachsen der nuklearen Brennstäbe im Wesentlichen parallelen Richtung hindurch bewegt wird, wobei der Strahlungsdetektor (3) in dem Rahmen an einer Position angeordnet ist, die die Detektion von Strahlung von dem Brennelement ermöglicht, wenn dieses Brennelement durch diese Öffnung bewegt wird;
Positioniermittel (51, 61), angeordnet in Übereinstimmung mit dieser Öffnung und ausgebildet zum Halten einer Oberfläche des Brennelements mit einem vorbestimmten Abstand von dem Strahlungsdetektor, wenn das Brennelement durch diese Öffnung bewegt wird.

2. Vorrichtung nach Anspruch 1, **dadurch gekennzeichnet, dass** dieses Positioniermittel zumindest eine erste Stützführung (51) umfasst, die an dem Rahmen befestigt und zur Kontaktierung der Oberfläche des Brennelements derart ausgebildet ist, dass diese Oberfläche des Brennelements an der ersten Stützführung (51) anliegt, wenn das Brennelement durch diese Öffnung bewegt wird.

3. Vorrichtung nach Anspruch 2, **dadurch gekennzeichnet, dass** dieses Positioniermittel zusätzlich zumindest ein erstes Druckelement (61) umfasst, welches zum Drücken des Brennelements hin zur ersten Stützführung (51) ausgebildet ist.

4. Vorrichtung nach Anspruch 3, **dadurch gekennzeichnet, dass** die Öffnung vier Seiten hat, wobei die erste Stützführung (51) in Übereinstimmung mit einer Ersten dieser Seiten angeordnet ist und das erste Druckelement (61) in Übereinstimmung mit einer Zweiten dieser Seiten angeordnet ist, wobei die Zweite der Seiten gegenüberliegend der Ersten der Seiten angeordnet ist.

5. Vorrichtung nach einem der Ansprüche 3 und 4, **dadurch gekennzeichnet, dass** die erste Stützführung (51) zumindest eine Walze umfasst, ausgebildet zum Drehen angetrieben durch das Brennelement, wenn das Brennelement durch die Öffnung bewegt wird.

6. Vorrichtung nach Anspruch 4, **dadurch gekennzeichnet, dass** die Vorrichtung eine zweite Stützführung (52), die in Übereinstimmung mit einer Dritten der Seiten angeordnet ist, und ein zweites Druckelement (62), die in Übereinstimmung mit einer Vierten der Seiten angeordnet ist, umfasst.

7. Vorrichtung nach Anspruch 6, **dadurch gekennzeichnet, dass** die erste Stützführung (51) eine erste Walze umfasst und dass die zweite Stützführung (52) eine zweite Walze umfasst und dass das erste Druckelement (61) zum Drücken des Brennelements gegen die erste Walze ausgebildet ist und dass das zweite Druckelement (62) zum Drücken des Brennelements hin zur zweiten Walze ausgebildet ist, wenn das Brennelement durch die Öffnung bewegt wird.

8. Vorrichtung nach Anspruch 1, **dadurch gekennzeichnet, dass** sie zumindest ein Druckelement (61) umfasst, welches zum Drücken des Brennelements hin zu einer Seite der Öffnung ausgebildet ist, wobei das Druckelement (61) zumindest eine Walze umfasst, wobei die Walze einem Detektor (611) zum Kodieren einer axialen Bewegung des Brennelements in Bezug auf den Strahlungsdetektor zugeordnet ist.

9. Vorrichtung nach Anspruch 8, **dadurch gekennzeichnet, dass** sie zumindest zwei Druckelemente (61, 62) umfasst, die zum Drücken des Brennelements hin zu entsprechenden Seiten der Öffnung ausgebildet sind, wobei jedes Druckelement (61, 62) zumindest eine Walze umfasst, wobei jede der Walzen einem Detektor (611, 612) zum Kodieren einer axialen Bewegung des Brennelements in Bezug auf den Strahlungsdetektor zugeordnet ist.

10. Vorrichtung nach Anspruch 5, **dadurch gekennzeichnet, dass** die zumindest eine Walze einem Detektor zum Kodieren der axialen Bewegung des Brennelementes in Bezug auf den Strahlungsdetektor zugeordnet ist.

11. Vorrichtung nach einem der vorhergehenden Ansprüche, **dadurch gekennzeichnet, dass** sie Kopplungsmittel (7) ausgebildet zum Koppeln des Rahmens (1) mit einem Brennelementgestell in einem temporären Brennelementspeicherbecken umfasst.

12. Vorrichtung nach einem der vorhergehenden Ansprüche, **dadurch gekennzeichnet, dass** sie Mittel (8) zum Modifizieren der Distanz zwischen dem Strahlungsdetektor und der Öffnung derart umfasst, dass die Distanz zwischen dem Strahlungsdetektor und der Oberfläche des Brennelements, welches durch diese Öffnung bewegt wird, modifiziert werden kann.

13. Vorrichtung nach einem der vorhergehenden Ansprüche, **dadurch gekennzeichnet, dass** der Strahlungsdetektor ein Gamma-Strahlendetektor (3) ist, der mit einer austauschbaren Kollimator-Baugruppe (35) ausgestattet ist.

14. Vorrichtung nach einem der vorhergehenden Ansprüche, **dadurch gekennzeichnet, dass** der Strahlungsdetektor ein Gamma-Strahlendetektor ist, der einen Luftkollimator (31) umfasst.

15. Vorrichtung nach Anspruch 14, **dadurch gekennzeichnet, dass** der Luftkollimator (31) einen horizontalen Querschnitt in Form eines gleichschenkligen Trapezoids hat.

16. Vorrichtung nach Anspruch 15 oder 16, **dadurch gekennzeichnet, dass** der Luftkollimator lösbar an ein Gehäuse des Strahlungsdetektors gekoppelt ist.

17. Vorrichtung nach Anspruch 1, **dadurch gekennzeichnet, dass** die Positioniermittel ein erstes Druckelement (61), ausgebildet zum Drücken des Brennelements in eine erste Richtung, und ein zweites Druckelement (62), ausgebildet zum Drücken des Brennelements in eine zweite Richtung, die einen 90°-Winkel mit Bezug zur ersten Richtung bildet, umfassen.

## Revendications

1. Appareil d'inspection radiométrique d'un élément de combustible (100) comprenant une pluralité de barres de combustible nucléaire, l'appareil comprenant au moins un détecteur de rayonnement (3), l'appareil comprenant de surcroît :
un cadre (1) comprenant une ouverture (2) configurée pour que l'élément de combustible soit déplacé à travers ladite ouverture dans une direction sensiblement parallèle aux axes longitudinaux des barres de combustible nucléaire, le détecteur de rayonnement (3) étant situé dans ledit cadre dans une position qui permet de détecter un rayonnement issu de l'élément de combustible lorsque ledit élément de combustible est déplacé à travers ladite ouverture ;
des moyens de positionnement (51, 61) situés en correspondance de ladite ouverture et configurés pour garder une surface de l'élément de combustible à une distance prédéterminée du détecteur de rayonnement lorsque l'élément de combustible est déplacé à travers ladite ouverture.

2. Appareil selon la revendication 1, **caractérisé en ce que** lesdits moyens de positionnement comprennent au moins un premier guide de support (51) monté sur ledit cadre et configuré pour venir en contact avec ladite surface de l'élément de combustible de sorte que ladite surface de l'élément de combustible repose sur ledit premier guide de support (51) lorsque l'élément de combustible est déplacé à travers ladite ouverture.

3. Appareil selon la revendication 2, **caractérisé en ce que** lesdits moyens de positionnement comprennent en outre au moins un premier élément de poussée (61) configuré pour pousser l'élément de combustible vers le premier guide de support (51).

4. Appareil selon la revendication 3, **caractérisé en ce que** l'ouverture comporte quatre côtés, le premier guide de support (51) étant situé en correspondance d'un premier desdits côtés et ledit premier élément de poussée (61) étant situé en correspondance d'un deuxième desdits côtés, ledit deuxième desdits côtés étant opposé audit premier desdits côtés.

5. Appareil selon l'une quelconque des revendications 3 et 4, **caractérisé en ce que** ledit premier guide de support (51) comprend au moins un rouleau configuré pour être entraîné en rotation par ledit élément de combustible lorsque ledit élément de combustible est déplacé à travers ladite ouverture.

6. Appareil selon la revendication 4, **caractérisé en ce qu'**il comprend un second guide de support (52) situé en correspondance d'un troisième desdits côtés, et un second élément de poussée (62) situé en correspondance d'un quatrième desdits côtés.

7. Appareil selon la revendication 6, **caractérisé en ce que** ledit premier guide de support (51) comprend un premier rouleau et **en ce que** ledit second guide de support (52) comprend un second rouleau, et **en ce que** ledit premier élément de poussée (61) est configuré pour pousser l'élément de combustible contre ledit premier rouleau et **en ce que** ledit second élément de poussée (62) est configuré pour pousser l'élément de combustible vers ledit second rouleau, lorsque ledit élément de combustible est déplacé à travers ladite ouverture.

8. Appareil selon la revendication 1, **caractérisé en ce qu'**il comprend au moins un élément de poussée (61) configuré pour pousser l'élément de combustible vers un côté de ladite ouverture, l'élément de poussée (61) comprenant au moins un rouleau, ledit rouleau étant associé à un détecteur (611) pour le codage axial du mouvement de l'élément de combustible par rapport au détecteur de rayonnement.

9. Appareil selon la revendication 8, **caractérisé en ce qu'**il comprend au moins deux éléments de poussée (61, 62) configurés pour pousser l'élément de combustible vers des côtés respectifs de ladite ouverture, chaque élément de poussée (61, 62) comprenant au moins un rouleau, chacun desdits rouleaux étant associé à un détecteur (611, 612) pour le codage axial du mouvement de l'élément de combustible par rapport au détecteur de rayonnement.

10. Appareil selon la revendication 5, **caractérisé en ce que** ledit au moins un rouleau est associé à un détecteur pour le codage axial du mouvement de l'élément de combustible par rapport au détecteur de rayonnement.

11. Appareil selon l'une quelconque des revendications précédentes, **caractérisé en ce qu'**il comprend des moyens de couplage (7) configurés pour coupler le cadre (1) à un casier d'élément de combustible dans une piscine de stockage d'élément de combustible temporaire.

12. Appareil selon l'une quelconque des revendications précédentes, **caractérisé en ce qu'**il comprend des moyens (8) de modification de la distance entre le détecteur de rayonnement et l'ouverture, pour que la distance entre le détecteur de rayonnement et la surface de l'élément de combustible qui est déplacé à travers ladite ouverture puisse être modifiée.

13. Appareil selon l'une quelconque des revendications précédentes, **caractérisé en ce que** le détecteur de rayonnement est un détecteur de rayonnement gamma (3) pourvu d'un ensemble collimateur échangeable (35).

14. Appareil selon l'une quelconque des revendications précédentes, **caractérisé en ce que** le détecteur de rayonnement est un détecteur de rayonnement gamma comprenant un collimateur à air (31).

15. Appareil selon la revendication 14, **caractérisé en ce que** le collimateur à air (31) a une coupe droite horizontale sous la forme d'un trapézoïde isocèle.

16. Appareil selon la revendication 15 ou 16, **caractérisé en ce que** le collimateur à air est couplé de façon détachable à un boîtier du détecteur de rayonnement.

17. Appareil selon la revendication 1, **caractérisé en ce que** les moyens de positionnement comprennent un premier élément de poussée (61) configuré pour pousser l'élément de combustible dans une première direction et un second élément de poussée (62) configuré pour pousser l'élément de combustible dans une seconde direction, formant un angle de 90 degrés par rapport à ladite première direction.
